Europäisches Patentamt

(19) European Patent Office

Office européen des brevets

(11) Publication number: **0 065 690**
**B1**

(12) **EUROPEAN PATENT SPECIFICATION**

(45) Date of publication of patent specification: **05.11.86**

(51) Int. Cl.⁴: **B 24 D 3/28**

(21) Application number: **82104040.9**

(22) Date of filing: **10.05.82**

(54) **Dry grinding cemented carbide workpieces with silver-coated diamond grit.**

(30) Priority: **18.05.81 US 264765**

(43) Date of publication of application:
**01.12.82 Bulletin 82/48**

(45) Publication of the grant of the patent:
**05.11.86 Bulletin 86/45**

(84) Designated Contracting States:
**AT BE CH DE FR GB IT LI NL SE**

(56) References cited:
**FR-A-1 492 567**
**FR-A-1 522 735**
**GB-A-1 095 564**
**GB-A-1 154 598**
**GB-A-1 473 218**
**US-A-3 528 788**
**US-A-3 902 873**

The file contains technical information
submitted after the application was filed and
not included in this specification

(73) Proprietor: **GENERAL ELECTRIC COMPANY**
**1 River Road**
**Schenectady New York 12305 (US)**

(72) Inventor: **Ruark, William Webster**
**379 Brisbane Avenue**
**Westerville Ohio 43081 (US)**
Inventor: **Pascoe, Edwin Albert**
**6956 Eastview Drive**
**Worthington Ohio 43085 (US)**

(74) Representative: **Catherine, Alain et al**
**General Electric - Deutschland Munich Patent**
**Operations Frauenstrasse 32**
**D-8000 München 5 (DE)**

Courier Press, Leamington Spa, England.

# 0 065 690

**Description**

The present invention relates to resin-bonded grinding elements containing diamond grit and more particularly to the use of silver-coated diamond grit therein for dry grinding cemented carbide workpieces.

Use of metal coated diamond grit embedded in the abrasive section of resin bonded grinding wheels is a well practiced commercial technique for enhancing the grinding operation. US—A—3 957 461 proposes such metal coated diamond for use in the grinding section of a resin bonded grinding element wherein the metal coating is taught to form a mechanically strong shell for holding together fractional portions of the diamond particles and for effectively increasing the adhesion between the diamond particles and the resin material. Coatings shown include cobalt, nickel, silver, cadmium, zinc, copper, iron, tin, molybdenum, titanium, manganese, aluminum, chromium, gold, tungsten, zirconium, platinum group metals, and combinations and alloys thereof. GB—A—1 344 237 proposes to coat diamond or boron nitride abrasive grains with two materials, one of which is silicon and the other of which is a metal selected from copper, silver, gold, aluminum, cobalt, nickel, ruthenium, osmium, iridium, platinum, and certain transition metals. US—A—3 528 788 etches the metal coating on the diamond grid for improving the grinding ratio of resin bonded grinding wheels containing the etched grit.

US—A—3 779 727 proposes to incorporate fillers into the resinous material used to formulate resin bonded abrasive tools wherein the fillers include a solid lubricant and a metal which is silver, silver coated copper, or copper powder. The diamond grit or cubic boron nitride (CBN) abrasive further may be coated with conventional metals. As noted by Sioui in "The Evolution of Tests for Diamond Wheel Performance in Dry Tool and Cutter Sharpening", Proceedings: Diamonds in the 80's, pp. 131—138, Industrial Diamond Association, Chicago, Ill. (October 13—15, 1980), and in "The Use of Silver in Diamond and CBN Wheels for Dry Grinding Hard Materials", *Cutting Tool Engineering*, July/August, 1980, pp. 8—11; the silver filler in the resin apparently acts as a thermal conductivity agent to remove heat from the grinding section and workpiece area contacted by the grinding section due to the high thermal conductivity of the conductive metals silver, copper, and silver-coated copper.

US—A—3,955,324 proposes agglomerates of metal-coated diamonds for embedding in the grinding section of resin bonded grinding elements wherein the matrix metal of the agglomerates is a metal which possesses good heat conducting ability. Such metals are shown to include nickel, copper, cobalt, and silver or alloys thereof. US—A—4,024,675 proposes such aggregate abrasive grains wherein adhesion agents are added to the metal and abrasive grains to make a porous cake which is sintered and subsequently ground to produce the aggregated abrasive grains. US—A—4,246,006 forms aggregates of diamond particles wherein a powdered metal and the diamond abrasive particles are heated to sinter the metal followed by cooling and crushing of the resulting mass. Suitable metals for producing such agglomerates include copper, silver, tin, nickel, cobalt, and iron or alloys thereof.

US—A—4,239,502 dips diamond or CBN in a molten Ag/Mn/Zr brazing alloy which coated particles are brazed onto Mo or W rim portions of grinding wheels. US—A—2,411,867 mentions silver coated board.

The present invention is based upon a discovery of certain properties which properly coated silver-coated diamond grit displays in a resin bond grinding element when used to dry grind cemented metal carbide. These properties apparently have gone unnoticed in the prior art apparently because, although silver is among the list of many metals proposed, published tests of silver-coated diamond grit have not been found. As will be set forth herein, the thermal conductivity of silver, while probably of some benefit in the grinding process, is not the property upon which the invention is based.

The present invention is an improvement in a method for dry grinding a workpiece comprising either cemented metal carbide (e.g. cobalt cemented tungsten carbide) or a combination of cemented metal carbide and steel with a resin bonded grinding element having diamond particles embedded in the grinding surface thereof. The improvement in the process for increasing the grinding ratio and decreasing the power required to rotate said grinding element during grinding operations comprises using diamond particles coated with a layer of metal consisting essentially of elemental silver in the absence of any other lubricants, wherein the proportion of silver coating on each diamond particle ranges between about 25% and 65% by weight of said diamond particle.

Advantages of the present invention include a substantial improvement in the grinding ratio of the silver-coated diamond particles compared to uncoated diamond particles and to diamond particles coated with other metals such as, for example, nickel and copper. Another advantage is that the power required to rotate the grinding element containing the silver-coated diamond particles is about the same or only slightly more than the power required to rotate a grinding element containing uncoated diamond particles. These and other advantages will be readily apparent to those skilled in the art based upon the disclosure herein.

The properties possessed by the grinding element containing diamond particles, each of said particles having the exterior surfaces thereof coated with layer of silver, truly are unique and unexpected. The properties of increased grinding ratios and decreased grinding energy requirements are unique to silver compared to other metals proposed and conventionally used for coating diamond particles. That is, while increased grinding ratios typically are experienced by coating diamond grit with various metals, necessarily the power required to rotate the grinding element also increases because the coated grit is retained better in the resin matrix of the grinding wheel. Moreover, because the coated diamond grit usually is retained in the resin bond better than uncoated diamond grit, the coated diamond grit in resin bonded grinding elements typically improves the grinding performance of the grinding element for both wet and dry grinding. These properties and characteristics are typical of conventional commercially exploited copper and nickel coated diamond grit. These properties and characteristics, though, should be contrasted with the properties and characteristics of silver-coated diamond grit used in resin bonded grinding elements. As with metal coatings on diamond grit, grinding ratios are improved with the silver-coated diamond grit and are improved to a much greater degree than other metal coated diamond grit. Further, contrary to other metal coatings, the power required to rotate the grinding element containing silver-coated diamond grit is substantially the same or only slightly more than the power required to rotate a grinding element containing uncoated diamond grit. This low energy or power requirement to rotate the grinding element truly is an unexpected property of silver-coated diamond grit and a property not possessed by other metals conventionally used to coat diamond grit.

While the precise explanation of the improved performance of silver-coated diamond grit in resin-bonded grinding elements is not fully understood, the following proposal is given by way of explanation and not by way of limitation. As the Examples will adequately demonstrate, the use of conventional metals to coat diamond grit, for example nickel or copper, always translates into increased grinding energies relative to the use of uncoated diamond grit in resin bond grinding elements because the metal coating provides better bond retention in the resin bond material. This is to be contrasted with the use of silver-coated grit wherein a freer cutting action is seen which translates into substantially equivalent grinding energies for the silver-coated diamond grit as for uncoated diamond grit. Further, the bond retention of the silver-coated diamond grit in the resin bond grinding element is not improved by reason of the silver coating and usually a poorer bond retention is seen in view of the wet grinding test results as reported herein. Thus, it appears that while improved heat transfer characteristics of the silver necessarily must be present to some degree, the prime characteristic of the silver-coated diamond grit in the present invention is the lubricity which the silver coating provides during grinding operations. Thus, while poorer bond retentions are seen, the reduced wheel temperature because of the free cutting action of the silver-coated grit compensates for the reduced bond retention during dry grinding of carbide workpieces. The lubricity function of silver-coated diamond grit is an unexpected property which has not been reported in the art.

The coated diamond grit of the present invention comprises individual diamond particles, each of said particles being coated with a layer of metal consisting essentially of elemental silver. While a variety of techniques for individually coating the diamond grit may be possible, the preferred method for coating the diamond grit with elemental silver utilizes a formulation known in the art as the Brashear formula. The Brashear formula involves an ammoniacal silver solution and a reducing solution. The ammoniacal silver solution preferably is formed from silver nitrate and potassium hydroxide dissolved in water to which ammonia is added. The reducing solution preferably is aqueous invert sugar. The essence of the process for coating diamond grit with a coating consisting essentially of elemental silver involves suspending the diamond grit in the ammoniacal silver solution, preferably by physical agitation thereof, followed by the slow addition of the reducing solution thereto while maintaining the agitation and diamond suspension in the silver solution. The metered rate of addition of the reducing solution is carried on until the silver has been coated onto the individual diamond grit and such process repeated until the desired coating weight (or thickness) has been attained. Advantages of the process include a substantially uniform continuous grainy coating of silver on the diamond grit of closely controlled weight percent.

The proportion of elemental silver coating on the diamond grit generally ranges from about 10 to 75 percent by weight of the coated grit and advantageously between about 25 and 65 percent by weight. As noted above, the Gernier process for coating diamond grit with silver can be practiced advantageously to produce a fairly precise, predetermined weight of silver coating on the diamond grit which coating is substantially uniform in thickness on all surfaces of each diamond particle coated. The particle size of the diamond grit coated is not a limitation of the Grenier process nor is the particle size a limitation on the present invention as those diamond grit particles sizes conventionally used in resin bond grinding elements are used according to the precepts of the present invention. Generally, the diamond grit can range in particle size from about 400 mesh (37 microns) upwards to 40 mesh (420 microns). Preferably, though, narrow particles size distributions are used according to conventional grinding technology with particle size distributions of 80/100 mesh (177—149 microns), 140/170 mesh (105—88 microns), and 200/230 mesh (74—62 microns) being typical preferred particle size distributions of the diamond grit for use in the present invention.

The resin most frequently used in resin bonded grinding elements or other abrasive elements is a phenol-formaldehyde reaction product. However, other resins or organic polymers may be used such as melamine or urea formaldehyde resins, epoxy resins, polyesters, polyamides, and polyimides. A resinoid grinding wheel with the silver coated diamond grit of the present invention can be formed, for example, in the manner as taught in US—A—3,645,706. Further details on resins can be found in US—A—3,385,684; 3,664,819; 3,779,727; and 3,957,461. The concentration of silver-coated diamond grit in the resin bonded grinding element broadly ranges from about 25 to 200 (100 concentration conventionally being defined in the art as 4.4 carats/cm$^3$ with 1 carat equal to 0.2 g wherein the concentration of diamond grains is linearly related to its carat per unit volume concentration). Preferably, the concentration of coated diamond grit ranges from about 50—100. The size and shape of the grinding element is conventional and typically grinding wheels are of a disc shape or cup shape. Of course, a secondary distribution of silicon carbide or other secondary abrasive particles may be used in the resin bond grinding elements without detrimentally effecting the performance of the grinding element containing the silver-coated diamond grit of the present invention.

The improved resinoid grinding elements of the present invention having silver-coated diamond grit in the grinding area are extremely useful in dry grinding of non-ferrous workpieces such as cemented tungsten carbide and cemented tungsten carbide/steel combinations. Cemented tungsten carbide and similar non-ferrous workpieces are well known in the art and little more need be said about them here.

The following Examples show how the present invention can be practiced, but should not be construed as limiting. In this application, all units are in the metric system, all mesh sizes are in United States Standard Sieve Series, and all percentages are by weight, unless otherwise expressly indicated.

In the Examples, the silver-coated diamond grit was manufactured by coating the diamond grit of indicated particle size with a coating consisting essentially of silver according to the Grenier process. A typical procedure according to the Grenier process is given here. Such process was used to coat all the diamond grit in the Examples with the exception that the proportion of silver coated onto the diamond grit was adjusted in order to coat the diamond grit with a desired proportion of the coating.

Initially, the diamond grit is cleaned with aqua regia to remove residual impurities of graphite, oil, and like impurities. The surfaces of the diamond grit then were activated by stirring the diamond grit in a stannous chloride solution made from 20 grams stannous chloride, 20 ml HCl, and one liter of hot water. After 20 minutes of stirring in the stannous chloride solution, the diamond grit was rinsed once with deionized water. The surface-activated diamond grit (50 g sample) then was added to a vessel containing the ammoniacal silver solution which was made by the following procedure: 20 grams silver nitrate was added to 300 ml water followed by the addition of 10 grams of potassium hydroxide in 100 ml of water. Next, 50 ml of ammonium hydroxide was added to the vessel and the contents of the vessel stirred until the contents were clear. The diamond grit was suspended in this ammoniacal silver solution by agitation with a conventional bladed stirrer which stirrer was set at a rate sufficient so that the diamond grit was suspended in the solution.

A reducing solution of invert sugar was made by adding 90 grams table sugar to 1 liter of deionized water followed by the further addition of 4 ml nitric acid. This solution was heated at about 90°C for one-half hour and then cooled. The reducing solution was added to the ammoniacal silver solution with suspended diamond therein at a rate of about 25 drops per minute while agitation of the ammoniacal silver solution was continued. At the conclusion of the addition of the reducing solution, the diamond was separated and rinsed with additional water. Preferably, the silvering solution is subjected to a silver recovery operation by techniques conventional in the art. This silvering procedure then was repeated a successive number of times until the desired weight percent of silver on the diamond grit was achieved. For example, coating 80/100 mesh diamond grit at about 50% silver coating by weight has taken 9 repeats of the foregoing procedure. The number of repeats of the silvering procedure for various size diamond particles for various weight percents of silver coating can be established readily by those skilled in the art.

The recovered silver-coated diamond grit then was used in forming resinoid grinding elements as indicated in the Examples which follow.

Example 1

In order to demonstrate the effectiveness using silver coated diamond grit in resin bond grinding wheels for dry grinding cemented tungsten carbide workpieces, a series of phenolic resin bonded grinding wheels were prepared containing 25 volume percent (100 concentration) of various types of diamond grit. The grinding wheels were standard D11V9 test wheels, 9.525 cm×3.81 cm×3.175 cm (3.75″×1.5″×1.25″) with a 0.3175 cm (0.125″) wide abrasive rim. The diamond grit was either uncoated or coated at various levels with copper, nickel, or silver. The workpieces ground were 6.4 mm×19.1 mm bars of Carboloy Grade 44A cemented tungsten carbide (Carboloy is a Registered Trademark of General Electric Company). The two sets of dry grinding conditions used are given below:

|  | Condition #1 | Condition #2 |
| --- | --- | --- |
| Wheel speed | 22 m/sec | 18 m/sec |
| Table speed | 1.5 m/min | 1.5 m/min |
| Infeed | 0.064 mm | 0.075 mm |
| Coolant | dry | dry |

The weight-percent of the coating, the size of the diamond grit, and the results obtained (grinding ratio and grinding energy) are displayed in the following table.

4

## TABLE 1

| Test condition | Coating % | Mesh size of grit[1] | Nickel coating | | Copper coating | | Silver coating | |
|---|---|---|---|---|---|---|---|---|
| | | | GR[2] | GE[3] | GR | GE | GR | GE |
| 1 | 0 | 80/100 | 16 | 73 | 16 | 73 | 16 | 73 |
| 1 | 25 | 80/100 | 20 | 79 | 23 | 83 | 41 | 72 |
| 1 | 50 | 80/100 | 22 | 86 | 28 | 97 | 65 | 67 |
| 1 | 65 | 80/100 | 31 | 92 | 97 | 99 | 772 | 72 |
| 2 | 0 | 80/100 | 24 | 47 | 24 | 47 | 24 | 47 |
| 2 | 25 | 80/100 | 37 | 57 | 41 | 62 | 101 | 49 |
| 2 | 50 | 80/100 | 44 | 70 | 58 | 72 | 197 | 42 |
| 2 | 65 | 80/100 | 53 | 78 | 156 | 65 | 964 | 52 |
| 1 | 0 | 200/230 | 19 | 46 | 19 | 46 | 19 | 46 |
| 1 | 25 | 200/230 | 42 | 50 | 71 | 52 | 73 | 46 |
| 1 | 50 | 200/230 | 102 | 53 | 199 | 57 | 448 | 47 |
| 1 | 65 | 200/230 | 72 | 56 | 622 | 59 | 902 | 57 |
| 2 | 0 | 200/230 | 17 | 28 | 17 | 28 | 17 | 28 |
| 2 | 25 | 200/230 | 40 | 30 | 52 | 33 | 62 | 27 |
| 2 | 50 | 200/230 | 85 | 33 | 247 | 43 | 332 | 30 |
| 2 | 65 | 200/230 | — | — | — | — | — | — |

[1] 80/100 mesh is 177/149 microns.
  200/230 mesh is 74/62 microns.
[2] GR is grinding ratio (ratio of the volume of workpiece material removed to the volume of grinding wheel material removed during the grinding operation).
[3] GE is grinding energy (watt-hour/cm$^3$ of workpiece removed).

**0 065 690**

Several unexpected benefits of the invention are seen in the above-tabulated results. Grinding ratios of the wheels increase with increasing metal coating levels for all metals, yet for the silver coating the grinding ratios far exceed those of the other metal coatings at all coatings levels. Note that the grinding energies increased with increasing coating levels for the nickel and copper coated diamond grit. Such results should be contrasted with the grinding energies of the silver coated diamond grit where grinding energies remained substantially the same as the uncoated diamond grit for coatings levels up to 50% and only increased slightly at the 65% coating level.

The combination of improved grinding ratios and lower grinding energies is unique to silver coatings and truly unexpected. Practical benefits of these properties translate into longer wheel lives; significantly higher grinding rates (workpiece removal rate); and the ability to use high performance grinding wheels on grinding machines with smaller (horsepower) motors, which because of power requirements have been limited to uncoated grit or a low grinding rate.

Example 2

Additional phenolic resin bonded grinding wheels were prepared containing uncoated 140/170 mesh (105/88 microns) diamond grit and other wheels containing silver coated (29% coating level) and nickel coated (59% coating level) diamond grit. The diamond concentration in all wheels was 19 volume percent. The wheels were used to wet surface grind Carboloy Grade 370 tungsten carbide workpieces under the following grinding conditions.

|  | Condition #1 | Condition #2 |
|---|---|---|
| Wheel speed | 24.5 m/sec | 24.5 m/sec |
| Table speed | 15 m/min | 15 m/min |
| Downfeed | 0.025 mm | 0.038 mm |
| Crossfeed | 1.27 mm | 1.27 mm |
| Coolant | $H_2O$+water-soluble oil | $H_2O$+water-soluble oil |

The following grinding results were obtained:

TABLE 2

| Test condition | Uncoated grit | | Nickel coating | | Silver coating | |
|---|---|---|---|---|---|---|
|  | GR | GE | GR | GE | GR | GE |
| 1 | 90 | 24 | 207 | 31 | 59 | 22 |
| 2 | 36 | 20 | 123 | 23 | 20 | 19 |

These wet grinding results demonstrate that while nickel coating, as in dry grinding, results in higher grinding ratios as compared to uncoated grit, the silver coating results in lower grinding ratios compared to uncoated grit. Apparently, the silver coating, unlike the nickel coating, does not improve but lessens the retention of the grit in the resin bond as these results demonstrate.

**Claims**

1. A method for dry grinding a workpiece selected from the group consisting of cemented metal carbide and combinations of cemented metal carbide and steel with a resin bonded grinding element having metal coated diamond particles embedded in the grinding surface thereof, characterized in that it comprises using diamond particles coated with a layer of metal consisting essentially of silver in the absence of any other lubricant, wherein the proportion of silver coating on each diamond particle ranges between 25% and 65% by weight of said diamond particle.

2. The method of Claim 1 wherein said diamond particles range in size from between about 37 microns and 420 microns.

3. The method of Claim 2 wherein said diamond particles are restricted in size to a narrow particle size distribution.

4. The method of Claim 1 wherein the concentration of said silver coated diamond particles in said grinding element is between 1 and 9 carats/cm$^3$.

5. The method of Claim 4 wherein said concentration is between 2.2 and 4.4 carats/cm$^3$.

6

# 0 065 690

**Patentansprüche**

1. Verfahren zum Trockenschleifen eines Werkstückes, ausgewählt aus der Gruppe bestehend aus gebundenem Metallkarbid und Kobinationen von gebundenem Metallkarbid und Stahl mit einem Harz-gebundenen Schleifelement mit in seine Schleiffläche eingebetteten, Metall-ummantelten Diamantteilchen, dadurch gekennzeichnet, daß es die Verwendung von mit einer Metallschicht, bestehend im wesentlichen aus Silber, ummantelten Diamantteilchen in Abwesenheit von irgendeinem anderen Schmiermittel umfaßt, wobei der Anteil an Silber-Ummantelung an jedem Diamantteilchen im Bereich zwischen 25 und 65 Gewichtsprozent des Diamantteilchens liegt.

2. Verfahren nach Anspruch 1, dadurch gekennzeichnet, daß die Diamantteilchen in ihrer Größe im Bereich zwischen etwa 37 µm (Mikron) und 420 µm (Mikron) liegen.

3. Verfahren nach Anspruch 2, dadurch gekennzeichnet, daß die Diamantteilchen in ihrer Größe auf eine enge Teilchengrößenverteilung beschränkt sind.

4. Verfahren nach Anspruch 1, dadurch gekennzeichnet, daß die Konzentration der Silber-ummantelten Diamantteilchen in dem Schleifelement zwischen 1 und 9 Karat/cm$^3$ liegt.

5. Verfahren nach Anspruch 4, dadurch gekennzeichnet, daß die Konzentration zwischen 2,2 und 4,4 Karat/cm$^3$ liegt.

**Revendications**

1. Procédé de meulage à sec d'une pièce choisie dans le groupe constitué par un carbure de métal lie et des combinaisons de carbure de métal lié et d'acier avec un élément abrasif lié par une résine contenant des particles de diamant revêtues par un métal noyées dans sa surface abrasive, caractérisé en ce qu'il comprend l'utilisation de particles de diamant revêtues d'une couche de métal constitué essentiellement par de l'argent en l'absence de tout autre lubrifiant, sachant que la proportion de revêtement d'argent sur chacune des particules de diamant représente entre environ 25% et 65% en poids de la particule de diamant.

2. Procédé selon la revendication 1, dans lequel les particules de diamant présentent des tailles comprises entre environ 37 micromètres et 420 micromètres.

3. Procédé selon la revendication 2, dans lequel les particules de diamant présentent des tailles limitées à un écart granulométrique serré.

4. Procédé selon la revendication 1, dans lequel la concentration en particules de diamant revêtues d'argent dans l'élément abrasif est comprise entre 1 et 9 carats/cm$^3$.

5. Procédé selon la revendication 4, dans lequel la concentration est comprise entre 2,2 et 4,4 carats/cm$^3$.